Europäisches Patentamt

(19) European Patent Office

Office européen des brevets

(11) Publication number: **0 182 408**
**B1**

# (12) EUROPEAN PATENT SPECIFICATION

(45) Date of publication of patent specification: **19.04.89**

(21) Application number: **85201704.5**

(22) Date of filing: **17.10.85**

(51) Int. Cl.⁴: **F 16 K 31/163,** F 15 B 20/00

(54) Actuator and pressure adjusting unit therefore.

(30) Priority: **24.10.84 NL 8403234**

(43) Date of publication of application:
**28.05.86 Bulletin 86/22**

(45) Publication of the grant of the patent:
**19.04.89 Bulletin 89/16**

(84) Designated Contracting States:
**AT BE CH DE FR GB IT LI LU NL SE**

(56) References cited:
**CH-A- 480 544**
**DE-A-2 020 568**
**DE-B-1 157 872**
**FR-A-2 127 281**
**FR-A-2 354 464**
**GB-A-2 095 759**
**US-A-2 539 709**

(73) Proprietor: **El-O-Matic B.V.**
**No. 4 Westermaatsweg**
**NL-7556 BT Hengelo (NL)**

(72) Inventor: **Schwind, Heinz Günther**
**No. 58 K. van Barenstraat**
**NL-7558 DD Hengelo (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

## Description

The invention relates to an actuator actuatable by a pressurized medium, comprising: a piston chamber having therein at least one reciprocally movable piston which separates a second chamber from a first chamber; a medium conduit for said pressurized medium which emerges into the first chamber; a medium passage which emerges in the second chamber; a drive mechanism which couples said piston with a switch element; and valve means arranged such that when the medium pressure in the first chamber drops the piston moves under influence of the medium present in the second chamber and drives the switch element.

Such an actuator is known and also comprises spring means arranged in the second chamber for returning the piston to its original position should the pressure generated by the medium be interrupted, so that it is movable between two positions. Because of the use of these spring means, this known actuator has the drawback that, as a result of material fatigue symptoms, said spring means partially lose their force after a period of time, so that the switch no longer fulfils its function optimally and reliably. The spring means and the interior surface of the second chamber are moreover exposed to corrosion as a result of the suction of outside air into said second chamber. This drawback can however be obviated by arranging new spring means in the actuator, which however be obviated by considerable fitting costs and the actuator being temporarily out of use.

Another known actuator is disclosed in DE—A—2020568. This known actuator comprises a pair of pistons which cojointly move and drive a valve spindle. The two chambers arranged at the outer sides of either piston communicate with one another through a medium passage of restricted diameter and a valve, if pressurized medium is fed to the first chamber and the piston assembly is at the end of the piston stroke. Then, thue valve opens the medium passage to the second chamber and blocks an outlet to the atmosphere. If the supply of pressurized medium to the first chamber is interrupted and the first chamber is brought into open communication with the outer atmosphere, the valve blocks the communication between both chambers. The positive pressure difference between the second and first chamber moves the piston assembly and drives the valve spindle. Accordingly in either actuator position there is a pressure equilibrium between both chambers. This known actuator possesses the drawback in that it is not possible to apply varying pressure differences between both media for different actuators, which makes virtually impossible the application of different types of actuator with different volumes for the first and second chamber.

The invention has for its object to provide an actuator which is improved and does not possess the above-mentioned drawbacks. Accordingly the actuator according to the invention is characterized in that a pressure adjusting unit, is provided, this unit being in the form of an integral block and containing a medium inlet for pressurized medium, communicating via a high pressure medium passage with said medium conduit, a low pressure medium passage communicating with said second chamber; an over pressure valve and an under pressure valve both arranged in the low pressure medium passage.

If an underpressure valve is arranged in the high pressure medium passage, a minimal primary medium pressure has to be present to actuate the actuator.

If the underpressure valve switches between a first position, whereby the medium inlet is blocked and the high pressure medium passage communicates with an outlet discharging into the outside air, and a second position, whereby said medium inlet communicates with said high pressure medium bore and said outlet discharging into the atmosphere is blocked, the advantage is achieved that, with the fall of the primary pressure to below a minimal value, the supply of medium with the primary pressure is blocked, and the pressure present in the first chamber is simultaneously released into the atmosphere, so that the actuator moves to a position which is also a safety position.

If a valve element is arranged in the high pressure medium duct, which switches between a first position, whereby the medium inlet communicates with the first chamber, and a second position whereby the communication between said medium inlet and said first chamber is blocked and said first chamber thereby communicates with the atmosphere, the actuator can be operated in a simple manner because, with said switch element in the first position, medium with primary pressure is carried into the chamber, and with said element in the second position, the prevailing pressure in the first chamber is released into the atmosphere.

A failsafe actuator is obtained if the actuator is energizable from outside, and if during energizing said switch element is in the first position.

A particularly preferred actuator is obtained if the pressure adjust unit is given the form of an integral block and the medium inlet is coupled via gastight connecting means on the one hand with a section of the low pressure medium passage and on the other hand with a section of the low pressure medium passage arranged in the actuator. In this way the pressure adjusting unit can be manufactured beforehand as a whole and possibly also be applied to existing actuators, if the outlets of said pressure adjusting unit correspond within determined tolerance limits with the inlets of such an actuator for the low pressure and high pressure medium passages.

By making an optimal choice of the ratio between the volume of the second chamber and the stroke volume, which is preferably greater than 1 and more preferably is substantially equal to 1.4, with a reduced pressure in the second chamber substantially equal to 2.5 bar, a pressure increase is generated therein which is substantially equal to 1 bar by compressing the medium in said second chambre by displacement of the cylinder.

Another aspect of the invention relates to the pressure adjusting unit per se for use with an actuator.

Mentioned and other characteristics will be explained on the basis of a non-limitative embodiment of the actuator according to the inveniton given by way of example, with reference to the appended drawing.

In the drawing:

Fig. 1 shows a perspective, partly broken away and exploded view of an actuator, not being part of the invention, for operating a shut-off valve; and

Fig. 2—5 inclusive show section along the line II—II in Fig. 1 of an actuator provided with a pressure adjusting unit according to the invention in various operating states.

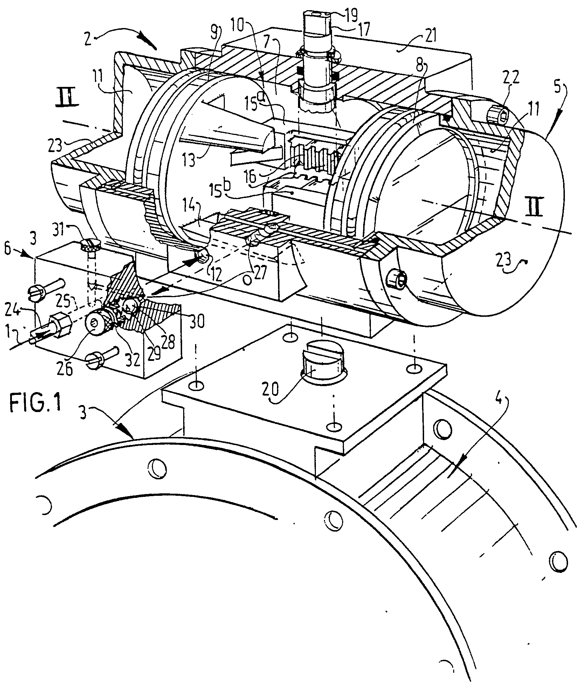

Fig. 1 shows an actuator unit 2 energized by a medium under pressure 1, for example a gas, for operating a shut-off valve 4 arranged in a conduit piece 3. Said actuator unit 2 comprises an actuator 5 and a pressure adjusting unit 6 arranged thereon.

The actuator 5 is provided with a piston chamber 7 having therein two coupled reciprocally movable pistons 8, 9 which separate second chambers 11 situated on either side of said pistons 8, 9 and form a first chamber 10 situated between both said pistons 8, 9. A medium conduit 12 emerges into said first chamber 10.

Each piston 8, 9 is provided with three guide elements 13, 14 and 15, whereby guide element 15 is provided with a rack 16 which grips onto a pinion 18 arranged on a rotary shaft 17. Said rack 16 and pinion 18 form here the drive mechanism which couples both pistons 8, 9 with a valve element illustrated by said rotary shaft 17 which can be operated manually on the one hand via shaft stump 19 and is provided on the other hand in a manner not shown with a form complementary to a shut-off valve end 20.

The piston chamber 7 is formed by a cylindrical piece and two covers 23 arranged thereon with the aid of attaching means 22.

The pressure adjusting unit 6 is provided with a medium inlet 24 which communicates on the one hand via a high pressure medium passage 25 with medium conduit 12 and which on the other hand communicates via a pressure reduction unit 26 and a low pressure medium passage 27 with both the two chambers 11. The pressure reduction unit 26 according to Fig. 1 consists of a ball member 28 which is pressed against a seat 30 by a spring 29. With the rise of pressure in the low pressure medium passage 27, whereby the transport of the medium 1 is restricted via an adjustable throttle 31, said ball member will be freed from said seat 30 and medium flows via a passage 32 to the atmosphere, so that in said low pressure medium passage 27 and in both the two chambers 11 a pressure is maintained that is reduced relative to the pressure prevailing in the first chamber 10 and which is supplied via the medium 1 along medium inlet 24.

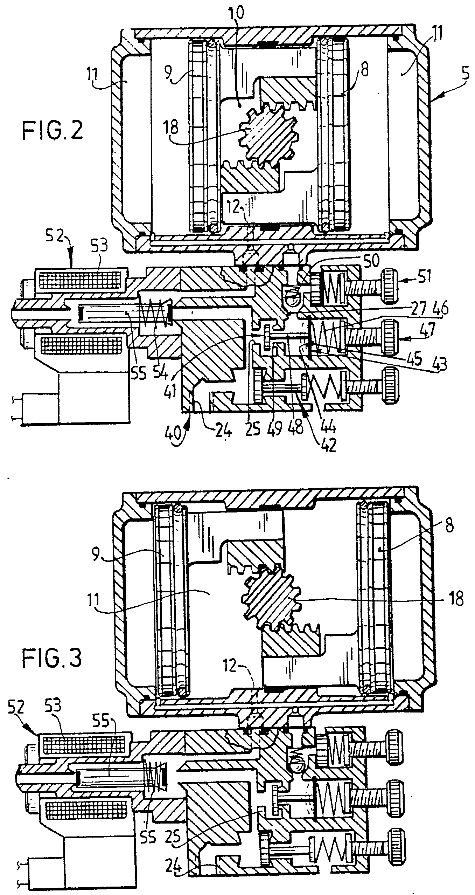

Figures 2—5 show a pressure adjusting unit 40 according to the invention coupled with the actuator 5, which unit is also provided with medium inlet 24 which communicates on the one hand via high pressure medium passage 25 with medium conduit 12 that emerges into the first chamber 10, and which communicates on the other hand via pressure reduction unit 41 and low pressure medium passage 27 with both the two chambers 11.

An underpressure valve 42 is accommodated in the high pressure medium passage 25. Said valve 42 blocks said high pressure medium passage 25 until the pressure input supplied via medium inlet 24 exceeds a pre-selected minimum value which is adjustable with the spring. Then said valve 42 opens and medium flows to the pressure reduction unit 41. Said pressure reduction unit 41 has the purpose of forming and maintaining the secondary pressure (the operative pressure in the second chambers) derived from the primary pressure, irrespective of changed primary and of the medium used. The primary pressure must always be higher than the secondary (operative) pressure.

The pressure reduction unit 41 adjusts the secondary pressure using a membrane 43. One side 44 of said membrane 43 is exposed to the primary pressure, while a spring 46, the spring force of which is adjustable using an adjusting screw 47, acts upon the other side 45. When the secondary pressure rises, said membrane 43 moves against said spring 46, and a valve body 48 attached to said membrane 43 alters the operative section of a valve seat 49. When the secondary pressure rises further, said valve body 48 lies on said valve seat 49 and closes the passage. From that moment the maximum secondary pressure in low pressure medium duct 27 is reached. If the pressure in the second chamber 11 falls, then the membrane 43 moves to the position indicated by dashed lines, and medium with the high primary pressure passes, the valve body 48 until the maximum adjustable secondary pressure is reached again.

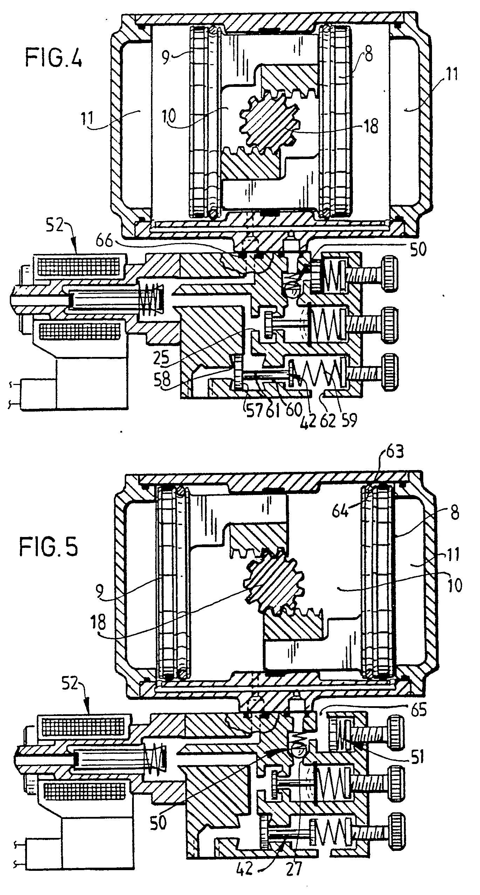

An underpressure valve 50 is also arranged in low pressure medium passage 27. When the primary pressure falls or is interrupted suddenly, said underpressure valve 50 prevents that the medium pressure prevailing in the second chamber 11 falls likewise or is lost (see also Fig. 4).

Finally an overpressure valve 51 is accommodated in the low pressure medium bore 27.

Further the pressure adjusting unit 40 is provided with an electrically actuable solenoid valve 52 accommodated in the high pressure medium passage 25, which valve 52 is movable between a first position, in which the medium inlet 24 communicates with the first chamber 10 (Fig. 3), and a second position in which the communication between said medium inlet 24 and said first chamber 10 is blocked and said first chamber 10 communicates with the atmosphere (Fig. 2). Said valve 52 is provided with coil 53 which acts upon an anchor 55 operating under the spring force of a spring 54. When said coil 53 is energized, said anchor 55 is moved against the spring force of the spring 54, and the medium inlet 24 communicates via high pressure medium passage 25 and medium conduit 12 with the first chamber 10. An outlet 56 communicating with the atmosphere is simultaneously blocked by the anchor 55 (Fig. 3). When the solenoid valve 52 is in the energized position (see Fig. 3) pistons 8 and 9 move away from one another. If the actuation of said solenoid valve 52 is interrupted, medium in the first chamber 10 is expelled via the outlet 56, so that pistons 8 and 9, under the influence of the lower overpressure prevailing in both the two chambers 11, move towards one another. Because the anchor 55 blocks the high pressure medium bore 25, when the solenoid valve 52 is not actuated a flow of medium supplied to medium inlet 24 into the atmosphere is prevented.

In order to make sure that the pistons 8 and 9 move towards one another into a failsafe position, the use of an underpressure valve 42 is recommended so that, when the primary pressure falls to below a minimum value, the medium conduit 24 is closed and simultaneously the high pressure medium bore 25 communicates with the atmosphere, so that, when a slow fall in primary pressure occurs, the failsafe situation is reached.

Underpressure valve 42 is therefore also provided with a valve disc 57, which, when the primary pressure falls below a minimum value, is pressed against a valve seat 58 using a spring 59. The high pressure medium passage 25 communicates simultaneously via a passage 60 around the stem 61 with an outlet 62 which emerges into the atmosphere (Fig. 4). Accordingly, when primary pressure falls below the minimum and the solenoid valve 52 is still actuated, air is expelled from the first chamber and both pistons 8 and 9 move towards one another and attain the failsafe position.

The overpressure valve 51 functions as follows, if as a result of a clearance 63 between for example a sealing ring 64 and the piston 8, medium of high pressure flows out of the first chamber 10 into the second chamber 11, said higher pressure is released via outlet 65 into the atomsphere, until a minimum secondary pressure is attained again. Since under these conditions the underpressure valve 50 blocks the low pressure medium passage 27, so that sufficient pressurized medium is present in both second chambers 11 to move the pistons 8 and 9 towards one another and reach the failsafe position, either when the solenoid valve 52 is not actuated and/or the underpressure valve 42 is in the position in which the medium inlet 24 is blocked.

Since the pressure adjust units are in principle detachable from the actuator 5, gastight connecting means 66 have to be present between said actuator 5 and said pressure adjusting unit.

The actuator 5 shown in Fig. 2—5 functions as follows starting from the situation shown in Fig. 2. Pressurized medium having an appropriate pressure is applied to the medium inlet 24. The medium passes the underpressure valve 42, and the pressure reduction unit 41, so that in both chambers 11 a reduced medium pressure is built up. When the predetermined secondary medium pressure is attained the pressure reduction unit 41 closes the high pressure medium passage 25. On actuation of the actuator 5, the solenoid valve 52 is actuated and high pressure medium is supplied via the medium conduit 12 to the chamber 10, and the pistons 8 and 9 move to the position shown in Fig. 3. During the movement of both pistons 8 and 9 the pressure rises in both chambers 11. The underpressure valve 50 is closed and medium is evacuated via the overpressure valve 51 until the maximal pre-set secondary medium pressure is attained.

When the actuator should be actuated in the reverse sense it is sufficient to interrupt the actuation of the solenoid valve 52, by which the medium present in the chamber 10 is evacuated to the atmosphere via the solenoid outlet.

It is recommended for the optical functioning of the actuator that this pressure difference is as small as possible. This could be achieved by choosing a stroke volume for both pistons 8 and 9 which is at least greater than the volume of both the chambers 11 and if the storke volume of both said pistons 8, 9 is adjusted to a value substantially equal to 1.4 and the reduced pressure in both chambers 11 is adjusted to 2.5 bar, the pressure difference is at the most equal to 1 bar.

It will be apparent that the pressure adjusting unit can be used on different types of actuators, and, depending on the stroke volumes of the pistons 8, 9 and on the volumes of both the second chambers 11, the adjustable pressure can always be set in both said second chambers 11 using the pressure reduction unit, so that an optimal pressure difference resulting from the movement of both said pistons 8, 9 can be found, and an optimal moment can be applied on rotary shaft 17 for operating the shut-off valve coupled with said rotary shaft 17. Further, it will be apparent that the pressure adjusting unit is constructed such that, with the loss of pressure on the medium inlet or with a fall below a preadjusted value, the pressure in the first chamber 10 drops and in this way the pistons move to a position which corresponds substantially with a failsafe position of the actuator.

Although the description refers to an actuator provided with two coupled pistons 8, 9, it will be apparent that the pressure adjust unit can also be used with an actuator provided with only a single piston and consequently with a single second chamber.

Air is preferably used as medium, but other gaseous media and possibly liquid media are in principle also suitable.

## Claims

1. Actuator (5) actuatable by a pressurized medium, comprising: a piston chamber having therein at least one reciprocally movable piston (8, 9) which separates a second chamber (11) from a first chamber (10); a medium conduit (12) for said pressurized medium which emerges into the first chamber (10); a medium passage (27) which emerges in the second chamber (11); a drive mechanism which couples said piston with a rotary shaft; and valve means (40, 41 and 50, 51) arranged such that when the medium pressure in the first chamber (10) drops the piston (8, 9) moves under influence of the medium present in the second chamber (11) and drives the rotary shaft, said valve means containing pressure reduction means (41), characterized in that said valve means (40, 41 and 50, 51) comprise a pressure adjusting unit (40) being in the form of an integral block, said integral block containing a medium inlet (24) for pressurized medium communicating via a high pressure medium passage (25) with said medium conduit (12), a low pressure medium passage (27) communicating with said second chamber (11); an over pressure valve (51) and an under pressure valve (50) both arranged in the low pressure medium passage (27).

2. Actuator (5) as claimed in claim 1, characterized in that an underpressure valve (42) is arranged in said high pressure medium passage (25).

3. Actuator (5) as claimed in claim 1 or 2, characterized in that said underpressure valve (42) switches between a first position, whereby said medium inlet (24) is blocked and said high pressure medium passage (25) communicates with an outlet (62) emerging into the atmosphere, and a second position, whereby said medium inlet (24) communicates with said high pressure medium passage (25) and the outlet (62) emerging into the atmosphere is blocked.

4. Actuator (5) as claimed in any of the preceding claims, characterized in that a solenoid valve (52) is arranged in said high pressure medium passage (25), the valve element (55) of which switches between a first position, whereby said medium inlet (24) communicates with the first chamber (10), and a second position, whereby the communication between said medium inlet (24) and said first chamber (10) is blocked and said first chamber (10) communicates with the atmosphere.

5. Actuator (5) as claimed in claim 4, characterized in that, said solenoid valve (52) being energized, said valve element (55) is in said first position.

6. Actuator (5) as claimed in any of the preceding claims, characterized in that said medium inlet (24) is coupled via gastight connecting means (66) on the one hand with said medium conduit (12) and on the other hand with a section of said low pressure medium passage (27) arranged in said actuator (5).

7. Actuator (5) as claimed in any of the preceding claims, characterized in that the ratio between the volume of said second chamber (11) and the stroke volume of said piston (8, 9) is greater than 1.

8. Actuator (5) as claimed in claim 7, characterized in that said ratio is substantially equal to 1.4 and the reduced pressure in said second chamber (11) is substantially equal to 2.5 bar.

9. Pressure adjusting unit (40) as claimed in claim 1—8.

## Patentansprüche

1. Betätigungsvorrichtung (5), die durch ein Druckmedium antreibbar ist und folgende Teile umfaßt: eine Kolbenkammer, die wenigstens einen hin- und herbeweglichen Kolben (8, 9) führt, der eine zweite Kammer (11) von einer ersten Kammer (10) trennt; eine Medienleitung (12) für des Druckmedium, die in der ersten Kammer (10) mündet; einen Medienkanal (27), der in der zweiten Kammer (11) mündet; einen Antriebsmechanismus, der den Kolben mit einer drehbaren Welle kuppelt; und eine Ventilanordnung (40, 41; 50, 51), die derart beschaffen ist, daß bei Abfall des Mediumdruckes in der ersten Kammer (10) der Kolben (8, 9) sich unter dem Einfluß des in der zweiten Kammer (11) befindlichen Druckes bewegt und die drehbare Welle antreibt, wobei die Ventilanordnung eines Druckverminderungsvorrichtung (41) aufweist, dadurch gekennzeichnet, daß die Ventilanordnung (40, 41 und 50, 51) eine Druckeinstelleinheit (40) in Form eines integralen Blocks aufweist, wobei der integrale Block einen Medieneinlaß (24) für das Druckmedium aufweist, der über einen Hochdruckmedienkanal (25) mit der Medienleitung (12) in Verbindung steht, und daß ein Niederdruckmedienkanal (27) mit der zweiten Kammer (11) in Verbindung steht und ein Überdruckventil (51) und ein Unterdruckventil (50) zusammen in dem Niederdruckmedienkanal (27) angeordnet sind.

2. Betätigungsvorrichtung (5) nach Anspruch 1, dadurch gekennzeichnet, daß ein Unterdruckventil (42) in dem Hochdruckmedienkanal (25) angeordnet ist.

3. Betätigungsvorrichtung (5) nach den Ansprüchen 1 oder 2, dadurch gekennzeichnet, daß das Unterdruckventil (42) zwischen einer ersten Stellung, in der der Medieneinlaß (24) abgesperrt ist und der Hochdruckmedienkanal (25) mit einem Auslaß (62) in Verbindung steht, der nach der Atmosphäre führt, und einer zweiten Stellung umschaltbar ist, in der der Medieneinlaß (24) mit dem Hochdruckmedienkanal (25) in Verbindung steht und der nach der Atmosphäre führende Auslaß (62) abgesperrt ist.

4. Betätigungsvorrichtung (5) nach einem der vorhergehenden Ansprüche, dadurch gekennzeichet, daß ein Magnetventil (52) in dem Hochdruckmedienkanal (25) angeordnet ist, dessen Ventilelement (55) zwischen einer ersten Stellung, in der der Medieneinlaß (24) mit der ersten Kammer (10) in Verbindung steht, und einer zweiten Stellung umschaltbar ist, in der die Verbindung zwischen dem Medieneinlaß (24) und der ersten Kammer (10) abgesperrt ist und die erste Kammer (10) mit der Atmosphäre in Verbindung steht.

5. Betätigungsvorrichtung (5) nach Anspruch 4, dadurch gekennzeichnet, daß das Magnetventil (52) bei Erregung mit seinem Ventilelement (55) in der ersten Stellung befindlich ist.

6. Betätigungsvorrichtung (5) nach einem der vorhergehenden Ansprüche, dadurch gekennzeichnet, daß der Medieneinlaß (24) über eine gasdichte Verbindung (66) einerseits mit der Medienleitung (12) und andererseits mit einem Abschnitt des Niederdruckmedienkanals (27) in Verbindung steht, der in der Betätigungsvorrichtung (5) angeordnet ist.

7. Betätigungsvorrichtung (5) nach einem der vorhergehenden Ansprüche, dadurch gekennzeichnet, daß das Verhältnis zwischen dem Volumen der zweiten Kammer (11) und dem Hubvolumen des Kolbens (8, 9) größer als 1 ist.

8. Betätigungsvorrichtung (5) nach Anspruch 7, dadurch gekennzeichnet, daß das Verhältnis etwa 1,4 beträgt und daß der reduzierte Druck in der zweiten Kammer (11) im wesentlichen etwa gleich ist 2,5 bar.

9. Druckeinstelleinheit (40), wie in Anspruch 1 bis 8 beansprucht.

## Revendications

1. Organe de commande (5) pouvant être actionné par un fluide sous pression, comprenant une chambre à piston dans lequel est disposé au moins un piston mobile dans les deux sens (8, 9) qui sépare une seconde chambre (11) d'une première chambre (10), un conduit de fluide (12) prévu pour le fluide sous pression et qui débouche dans la première chambre (10), un passage de fluide (27) qui débouche dans la seconde chambre (11), un mécanisme d'entraînement qui accouple le piston à un arbre rotatif, et des moyens à soupapes (40, 41 et 50, 51) agencés de façon telle que, lorsque la fluide sous pression présent dans la première chambre (10) chute, le piston (8, 9) se déplace sous l'influence du fluide présent dans la seconde chambre (11) et entraîne l'arbre rotatif, les moyens à soupapes contenant des moyens de réduction de pression (41), caractérisé en ce que les moyens à soupapes (40, 41 et 50, 51) comprenant une unité d'adjustement de pression (40) se présentant sous la forme d'un bloc d'une seule pièce, ce bloc d'une seule pièce contenant une entrée de fluide (24) prévue pour le fluide sous pression et communiquant avec le conduit de fluide (12) par l'intermédiaire d'un passage de fluide sous pression élevée (25), un passage de fluide à faible pression (27) communiquant avec la seconde chambre (11), et une soupape d'excès de pression (51) et un clapet de défaut de pression (50) tous deux disposés dans le passage de fluide à faible pression (27).

2. Organe de commande (5) suivant la revendication 1, caractérisé en ce qu'une soupape de défaut de pression (42) est disposée dans le passage de fluide sous pression élevée (25).

3. Organe de commande (5) suivant la revendication 1 ou 2, caractérisé en ce que la soupape de défaut de pression (42) change de position entre une première position, dans laquelle l'entrée de fluide (24) est bloquée et le passage de fluide sous pression élevée (25) communique avec une sortie (62) rejetant dans l'atmopshère, et une seconde position dans laquelle cette entrée de fluide (24) communique avec le passage de fluide sous pression élevée (25) et la sortie (62) rejetant dans l'atmosphère est bloquée.

4. Organe de commande (5) suivant l'une quelconque des revendications précédentes, caractérisé en ce qu'une électrovanne (52) est disposée dans le passage de fluide sous pression élevée (25), l'obturateur (55) de cette électrovanne changeant de position entre une première position, dans laquelle l'entrée de fluide (24) communique avec la première chambre (10), et une seconde position dans laquelle la communication entre l'entrée de fluide (24) et la première chambre (10) est bloquée et cette première chambre (10) communique avec l'atmosphère.

5. Organe de commande (5) suivant la revendication 4, caractérisé en ce que, lorsque l'électrovanne (52) est sous tension, l'obturateur (55) est dans la première position.

6. Organe de commande (5) suivant l'une quelconque des revendications précédentes, caractérisé en ce que l'entrée de fluide (24) est couplée, par l'intermédiaire de moyens de liaison étanches aux gaz (66), d'une part au conduit de fluide (12) à une section du passage de fluide à faible pression et d'autre part à une section du passage de fluide à faible pression (27) se trouvant dans l'organe de commande (5).

7. Organe de commande (5) suivant l'une quelconque des revendications précédentes, caractérisé en ce que le rapport entre le volume de la seconde chambre (11) et la cylindrée offerte au piston (8, 9) est supérieur à 1.

8. Organe de commande (5) suivant la revendication 7, caractérisé en ce que ledit rapport est sensiblement égal à 1,4 et la pression réduite régnant dans la seconde chambre (11) est sensiblement égale à 2,5 bars.

9. Unité d'adjustement de pression (40) suivant les revendications 1 à 8.

FIG.1

EP 0 182 408 B1

FIG.2

FIG.3

FIG.4

FIG.5